# EUROPEAN PATENT APPLICATION

(11) **EP 3 620 694 A1**
(43) Date of publication of application: **11.03.2020**
(21) Application number: 19192036.2
(22) Date of filing: 16.08.2019
(51) Int. Cl.: F16J 15/3288

(54) **BRUSH SEAL**

(30) Priority: 10.09.2018 GB 201814672
(71) Applicant: Rolls-Royce plc, London N1 9FX (GB)
(72) Inventor: Franceschini, Gervas, Derby, Derbyshire DE24 8BJ (GB)
(74) Representative: Rolls-Royce plc

(57) **Abstract**

A brush seal for sealing, in use, a leakage gap between relatively movable parts in an axial flow path between a high fluid pressure region (229) and a relatively lower fluid pressure region (230), the brush seal comprising: a backing member (216) comprising a first contact member (234) and a second contact member (235), the first contact member comprising a first contact surface (254), and the second contact member comprising a second contact surface (255), wherein the second contact surface is radially displaced from the first contact surface along a radial contact line (209) to define a first chamber opening (274) therebetween; and, a first bristle layer (218) in physical communication with both the first contact surface and the second contact surface along the radial contact line, wherein the first bristle layer is configured between the high pressure region and the backing member; wherein along the radial contact line, a collective contact surface of the backing member between the first bristle layer and the respective contact surfaces is greater than a surface area of the first chamber opening.

## Description

### BACKGROUND

### Field of the Disclosure

The present disclosure concerns a fluid seal. More particularly, the present disclosure concerns a brush seal for sealing a leakage path between relatively movable parts.

### Description of the Related Art

It is known to use a brush seal to provide a fluid seal between relatively movable components. Typically, the seal comprises a pack of resilient bristles that are fixed to one of the components and are in sliding relationship with the other component. For instance, an annular brush seal positioned in a leakage path between a rotatable shaft and static structure surrounding the shaft. The seal bristles in such an application are normally bonded to a mounting ring in turn carried in the static structure. The bristles are generally radially inwardly directed so that their free ends engage the shaft in sliding relationship. Together, the bristle pack and the shaft surface cooperate to define a leakage barrier between a region of high fluid pressure and a region of low fluid pressure.

Under the influence of a pressure drop the bristles tend to deform. To counter this effect, a backing member is used to provide additional support for the bristles on the downstream, low pressure side of the bristles and extends from the mounting member alongside the downstream face of the bristle pack to terminate short of the free ends of the bristles, thereby providing the necessary degree of axial support for the bristles.

A drawback in the use of such a backing member is that, as a result of the pressure drop that exists across them, the bristles are urged into frictional engagement with the backing member. The restoring forces provided by the inherent resilience of the bristles and other forces are thus inhibited. The loss of this restoring force is highly undesirable in view of the adverse effect that it can have upon sealing efficiency. For instance, in the above example if the shaft makes a temporary excursion from its normal position, the bristles will be deflected radially outwardly and may be frictionally constrained from returning to their normal position. This will in turn result in a gap opening between the bristles and the shaft surface and consequently increased seal leakage. In similar circumstances some bristles adopt a more radial disposition and thus by being frictionally constrained, increase the contact pressure between the bristles and the rotor with consequent increase of bristle wear, increased leakage and reduced seal life.

In some arrangements, such as the pressure-balanced brush seal and standard plain backing ring brush seal, either or both of excessive and repetitive bristle pack movement can score and scratch the backing member, eventually leading to fretting wear. Principally this is possible because of an unlubricated contact between the bristles and the backing member. Passive pressure-balanced brush seals provide an improvement over standard plain backing member brush seals in this regard. In passive pressure-balanced brush seals, the contact loading at the backing member interface is reduced by encouraging upstream air to pressurise a cavity in the backing member. While this is advantageous from an overall sealing performance point of view, reduced contact loading can reduce the friction between the bristles and the backing member, allowing greater circumferential movement of the bristle pack. Furthermore, the inclusion of the cavity in the backing member can limit the surface for bristle contact with the backing ring. Thus, although contact loading may be reduced, the contact pressure may be higher than desired. Generally, wear has been found to correlate with contact pressure, and may be further influenced by surface speed and interface temperature. Thus, a passive pressure-balanced brush seal arrangement is required, which provides reduced fretting wear between the bristles and the backing member.

### SUMMARY

According to a first aspect, there is provided a brush seal for sealing, in use, a leakage gap between relatively movable parts in an axial flow path between a high fluid pressure region and a relatively lower fluid pressure region. The brush seal may comprise a backing member comprising a first contact member and a second contact member. The first contact member may comprise a first contact surface. The second contact member may comprise a second contact surface. The second contact surface may be radially displaced from the first contact surface along a radial contact line to define a first chamber opening therebetween. A first bristle layer may be provided in physical communication with both the first contact surface and the second contact surface along the radial contact line. The first bristle layer may be configured between the high pressure region and the backing member. Adjacent to the radial contact line, a collective contact surface of the backing member between the first bristle layer and the respective contact surfaces may be greater than a surface area of the first chamber opening.

The arrangement may provide reduced wear between the bristle layer and the backing member. In particular, the arrangement provides reduced fretting wear between the bristle layer and the backing member. By maximising the surface of backing member in contact with the bristle layer, the contact surface between the backing member and the bristle layer may be increased so that the contact pressure may be reduced.

The radial contact line may extend along a radial-azimuthal contact plane. The radial contact line may refer to a radial line extending parallel to a radial-azimuthal contact plane. It will be appreciated that a substantial part (e.g., at least 30% of the radial length) of the bristle layer along the radial contact line may be, in use, maintained in contact with and supported by two or more contact surfaces of the backing member. In further examples, between about 30% and about 100% of the bristle layer along the radial contact line may be, in use, maintained in contact with and supported by two or more contact surfaces of the backing member. In yet further examples, between about 40% and about 100% of the bristle layer along the radial contact line may be, in use, maintained in contact with and supported by two or more contact surfaces of the backing member. In yet further examples, between about 50% and about 100% of the bristle layer along the radial contact line may be, in use, maintained in contact with and supported by two or more contact surfaces of the backing member. In further examples, about 60%, about 70%, about 80% or about 90% of the bristle layer along the radial contact line may be, in use, maintained in contact with and supported by two or more contact surfaces of the backing member.

The backing member may comprise a third or further contact member including a third or further contact surface. The third or further contact surface may be radially displaced from the first contact surface and the second contact surface along the radial contact line to define the first chamber opening and a second or further chamber opening. By adding a further contact surface in conjunction with the second chamber, sufficient pressure balancing of the bristle layer may be achieved, whilst optimising the surface of the backing member in contact with the bristle layer. Thus, additional contact surface may be achieved, whilst still maintaining a low contact force to reduce the contact pressure of the respective bristles against the backing member.

The backing member may comprise a first chamber which extends axially into the backing member from the first chamber opening. The backing member may comprise either or both of a second and further chamber which extends axially into the backing member from the second or further chamber opening. Thus, the first chamber and second chamber may be located within the backing member to allow the bristle layer to be reacted against the backing member by surfaces providing maximum benefit.

The third contact member may comprise a first passageway extending between the first chamber and the second chamber. Thus, the first passageway may provide fluid communication, in use, between the first chamber and the second chamber. By supplying a pressurised fluid to, and pressurising the first chamber, pressurised fluid may be further communicated to the second chamber. Furthermore, by supplying a pressurised fluid to, and pressurising the second chamber, pressurised fluid may be further communicated to the first chamber.

The second contact member may comprise a second passageway extending between a source of pressurised fluid and either or both of the first chamber and the second chamber. Thus, the second passageway may provide fluid communication, in use, between the source of pressurised fluid, and either or both of the first chamber and the second chamber. Thus, by supplying a pressurised fluid to, and pressurising the second chamber via the second passageway, pressurised fluid may be further communicated to the first chamber. Accordingly, the source of pressurised fluid may be located in a preferential axially upstream position to supply fluid to either or both of the first chamber and the second chamber at a desired pressure. Additionally or alternatively, the source of pressurised fluid may be discrete from the axial fluid flow upstream of the brush seal, and pressurised fluid may be sourced from a further location within the engine or a means of pressurising fluid for the specific purpose of feeding either or both of the first chamber and the second chamber.

The pressurised fluid may pressurise the or each respective chamber, in use, to a pressure higher than that of the pressure of the low fluid pressure region. The pressurised fluid may pressurise the or each respective chamber, in use, to a pressure substantially equal to or less than that of the pressure of the high fluid pressure region. Alternatively, the pressurised fluid may pressurise the or each respective chamber, in use, to a pressure substantially equal to or greater than that of the pressure of the high fluid pressure region. The pressurised fluid, in use, at least partially reacts axially applied forces on the first bristle layer against the backing member. In this way, the degree of pressure within either or both of the first chamber and the second chamber may infer the reaction force applied to the bristle layer.

Each contact member may comprise an intrinsic or extrinsic axially extending portion of the backing member upstanding or protruding from a face of the backing member. Thus, one or more axially extending portions may be integrally formed with the backing member, forming a backing member of unitary construction. Thus, one or more chambers may be formed by machining a recess between the or each respective contact member, cast, or formed as a unitary body. In some examples, the chambers may be formed by additive layer manufacturing. Such arrangements may, for example, allow one or more of the passageways to be added to one or more of the respective contact members during manufacture. Additionally or alternatively, one or more axially extending portions may be added during manufacture to the backing member, so forming a backing member of two or more part construction. Such extending portions may be added during manufacture by traditional or non-traditional forms of manufacture, including for example welding, brazing, diffusion bonding, or adhesive bonding. Such adhesive bonding may use high temperature adhesives known within the art. Such arrangements may, for example, allow one or more of the passageways to be added to one or more of the respective contact members before being added to the backing member during manufacture. Such two or more part construction processes may be simpler and cheaper than such one-part or unitary construction processes.

One or more of the contact members may comprise an axially extending flange upstanding from the face of the backing member which engages the first bristle layer. In this way, the flange may be shaped or formed according to specific requirements. Thus, the or each contact surface may be shaped, or modified as required.

A passageway axis of the first passageway may extend in a direction at least substantially parallel to the radial line. Thus, one or more passageway axes of the one or more first passageways may extend in a direction at least substantially parallel to the radial line. Additionally or alternatively, a passageway axis of the second passageway may extend in a direction at least substantially parallel to the radial line. Thus, one or more passageway axes of the one or more second passageways may extend in a direction at least substantially parallel to the radial line. Thus, a passageway axis of the or each respective first or second passageway may extend in a direction at least substantially parallel to the radial line. By at least substantially parallel, it is meant that the direction is, or is close to being, parallel to the or each local radial line.

A passageway axis of the first passageway may extend in a direction which is canted away from the radial line. Thus, one or more passageway axes of the one or more first passageways may extend in a direction which is canted away from the radial line. The or each radial contact line may extend along a radial-azimuthal contact plane. Additionally or alternatively, a passageway axis of the second passageway may extend in a direction which is canted away from the radial line. Thus, in some examples, one or more passageway axes of the one or more second passageways may extend in a direction which is canted away from the radial line on the radial-azimuthal contact plane. Thus, in some examples, a passageway axis of the or each respective first or second passageway may extend in a direction which is canted away from the radial line on the radial-azimuthal contact plane. Accordingly, in canting the one or more of either or both of the first and second passageways away from the radial line on the radial-azimuthal contact plane opposite to the lay angle of the bristles, there is a reduced likelihood of individual bristles becoming caught within the individual passageways. In some examples, the or each passageway axis may extend at an angle between about 0° to about 75° relative to the radial line. In further examples, the or each passageway axis may extend at an angle between about 30° to about 70° relative to the radial line. In yet further examples, the or each passageway axis may extend at an angle between about 45° to about 60° relative to the radial line.

In some examples, the respective bristles may extend at an angle between about 10° to about 70° relative to the radial line when the bristles are nominally undeflected. In further examples, the respective bristles may extend at an angle between about 15° to about 65° relative to the radial line when the bristles are nominally undeflected. In yet further examples, the respective bristles may extend at an angle between about 20° to about 60° relative to the radial line when the bristles are nominally undeflected. In yet further examples, the respective bristles may extend at an angle between about 30° to about 55° relative to the radial line when the bristles are nominally undeflected. The respective bristles, when the bristles are nominally undeflected, may extend at an angle which is about 90° to the passageway axis.

The first passageway may be formed within a portion of the backing member. Thus, one or more of the first passageways may be formed within a portion of the backing member. Additionally or alternatively, the second passageway may be formed within a portion of the backing member. Thus, one or more of the second passageways may be formed within a portion of the backing member. Thus, one or more of the first or second passageways may be formed within a portion of the backing member. Thus, the or each first or second passageway may comprise a hole formed within and extending through the backing member. Thus, internally-facing sidewalls of the passageways may be distinct from the external contact surface of the backing member. In forming the one or more passageways within a portion of the backing member, the possibility of individual bristles becoming caught within the individual passageways is at least partially reduced.

The first passageway may be formed upon a portion of the backing member. Thus, one or more of the first passageways may be formed within an externally-facing surface of a portion of the backing member. Additionally or alternatively, the second passageway may be formed within an externally-facing surface of a portion of the backing member. Thus, one or more of the second passageways may be formed upon a portion of the backing member. Thus, one or more of the first or second passageways may be formed upon a portion of the backing member. Furthermore, fluid in the passageways passing between the first chamber and the second chamber may aid in reacting axial forces on the bristles. In this way, the size of the chambers may be reduced accordingly.

The brush seal may comprise a second or further bristle layer configured axially forward of, and overlying the first bristle layer. In some examples, an intermediate pressure chamber may be formed between the first bristle layer and the second bristle layer. Thus, both the axially applied force acting on the first bristle layer, and the forces required to react the axially applied force, are reduced. Thus, the addition of a second or further bristle layer may reduce leakage. Furthermore, the addition of a second bristle layer may improve seal performance. In some examples, the second or further bristle layer may be arranged in close conformance, or in contact with the first bristle layer. Thus, in some examples, the second or further bristle layers are configured in close packed patterns so that interstices between the bristle rows are relatively small.

The first bristle layer may comprise a first and a second opposite end, the first contact surface being proximate to a first end of the bristle layer, and the second contact surface being proximate to the second end of the bristle layer.

The third or further contact surface between the backing member and the first bristle layer may be located between the first and second contact surfaces.

The first bristle layer and the backing member may be annular. The first and second contact surfaces may each define a circumferential region.

The or each of the first chamber and second chamber may be annular. The or each of the first chamber and second chamber may define a circumferential region. Thus, the or each of the first chamber and second chamber may extend entirely around the axis of the engine, forming one or more respective continuous chambers.

One or more of the respective contact surfaces may comprise a hardened surface layer which is relatively harder than a further portion of the backing member spaced from the or each contact surface. Additionally or alternatively, one or more of the respective contact surfaces may comprise a surface layer which comprises either or both of a relatively lower surface roughness and a relatively lower frictional coefficient than a further portion of the backing member spaced from the or each contact surface. The or each contact surface may comprise a diamond-like-carbon coating. The or each contact surface may comprise an oxidised surface layer. The or each contact surface may comprise a wear resistant surface layer which is relatively more wear resistant than a further portion of the backing member spaced from the or each contact surface. Such a surface layer may be deposited by, for example, one or more of electro-deposition, electro-coating, sputtering, physical vapour deposition or chemical vapour deposition.

According to a second aspect, there is provided a gas turbine engine comprising a brush seal of the type described in relation to the first aspect.

According to a third aspect, there is provided a brush seal including a bristle layer and a backing member positioned between the bristle layer and a second fluid pressure region. The backing member may contact the bristle layer at a first and second contact surface along a length of the bristle layer, and may be spaced from the bristle layer in a surface between the first and second contact surfaces to define one or more chambers between the bristle layer and the backing member. The or each chamber may be pressurised at a pressure greater than or equal to the second fluid pressure region to at least partially react axial forces acting on the bristle layer, whilst maintaining contact between the bristle layer and the backing member at the first and second contact surfaces. Resolved adjacent to the radial contact line, a collective contact surface of the backing member between the first bristle layer and the respective first and second contact surfaces may be greater than a surface area of the first chamber opening. The radial contact line may extend along a radial-azimuthal contact plane. The radial contact line may refer to a radial line extending parallel to a radial-azimuthal contact plane.

According to a fourth aspect, there is provided a method for sealing a leakage gap between relatively movable parts in an axial flow path between a high fluid pressure region and a relatively lower fluid pressure region. The method may comprise steps to configure a first bristle layer between the high and low fluid pressure regions, configure a backing member in physical communication with and between the first bristle layer and the low fluid pressure region, and; supply the or each chamber with a pressurised fluid to at least partially react a portion of the first bristle layer against the backing member. The backing member may comprise a first contact member and a second contact member. The first contact member comprises a first contact surface. The second contact member may comprise a second contact surface. The second contact surface may be radially displaced from the first contact surface along a radial contact line to define a first chamber opening therebetween. A first bristle layer may be provided in physical communication with both the first contact surface and the second contact surface along the radial contact line. The first bristle layer may be configured between the high pressure region and the backing member. Adjacent to the contact line, a collective contact surface of the backing member between the first bristle layer and the respective contact surfaces may be greater than a surface area of the first chamber opening. The radial contact line may extend along a radial-azimuthal contact plane. The radial contact line may refer to a radial line extending parallel to a radial-azimuthal contact plane.

According to a fifth aspect, there is provided a gas turbine engine for an aircraft comprising an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, wherein: the gas turbine engine comprises a brush seal as provided in any other aspect.

The turbine may be a first turbine, the compressor may be a first compressor, and the core shaft may be a first core shaft. The engine core further may comprise a second turbine, a second compressor, and a second core shaft connecting the second turbine to the second compressor. The second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge.

The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only, with reference to the Figures, in which:
**Fig.1** shows a sectional side view of a gas turbine engine;
**Fig.2** shows a mechanical arrangement for a geared fan gas turbine engine;
**Fig.3** shows an arrangement of an epicyclic gearbox;
**Fig.4a** shows a cross-sectional view of a brush seal;
**Fig.4b** shows a frontal view of the brush seal shown in Fig.4a;
**Fig.5a** shows a cross-sectional view of a brush seal arrangement of the present disclosure;
**Fig.5b** a frontal view of the arrangement described in Fig.5a;
**Fig.5c** shows a modified arrangement of the example shown in 5a and 5b;
**Fig.6a** shows a modified arrangement of the example shown in 5a and 5b;
**Fig.6b** shows a modified arrangement of the example shown in 5a and 5b;
**Fig.6c** shows a modified arrangement of the examples shown in 5a to 6b;
**Fig.7a** shows a modified arrangement of the examples shown in 5a and 5b;
**Fig.7b** shows a modified arrangement of the examples shown in 5a and 5b;
**Fig.8a** shows a modified arrangement of the examples shown Figs.7a and 7b;
**Fig.8b** shows a modified arrangement of the examples shown Figs.7a and 7b;
**Fig.9a** shows a modified arrangement of the examples shown Figs.6a and 6b;
**Fig.9b** shows a modified arrangement of the examples shown Figs.6a and 6b;
**Fig.10a** shows a modified arrangement of the examples shown Figs.9a and 9b; and,
**Fig.10b** shows a modified arrangement of the examples shown Figs.9a and 9b, in accordance with examples of the present invention.

### DETAILED DESCRIPTION OF THE DISCLOSURE

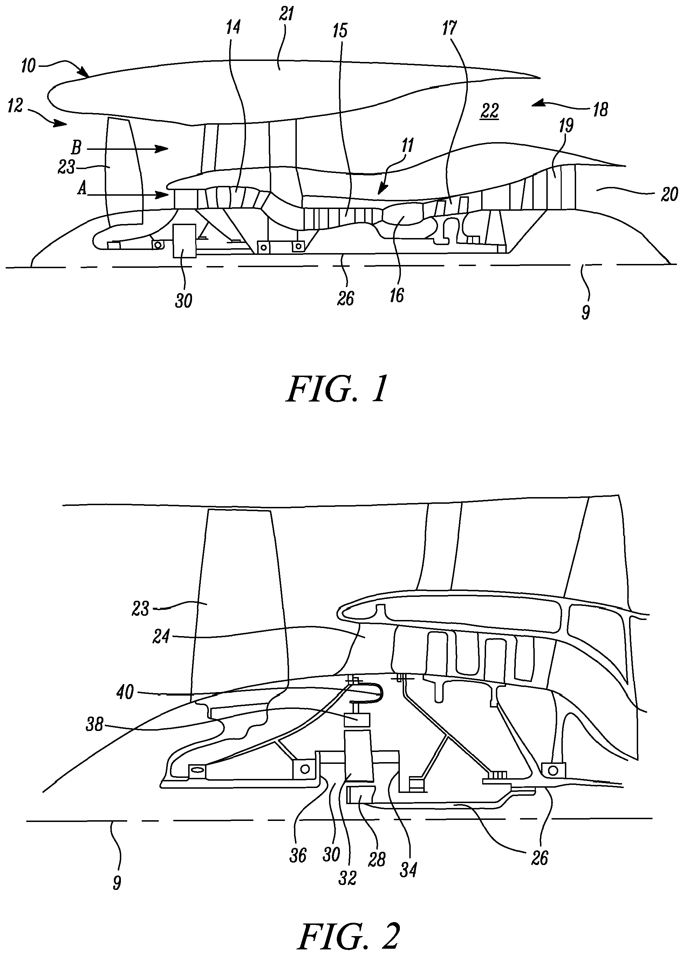

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

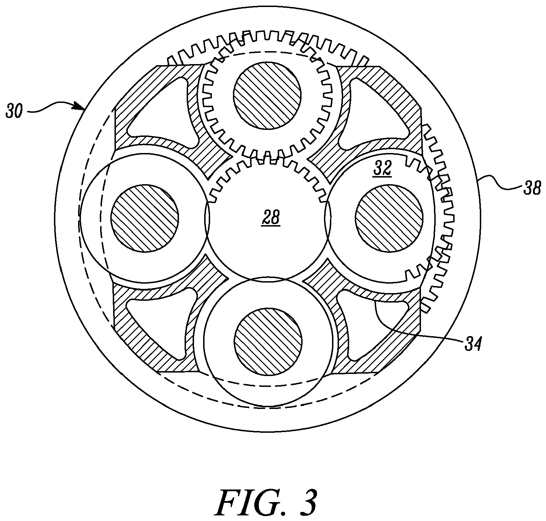

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

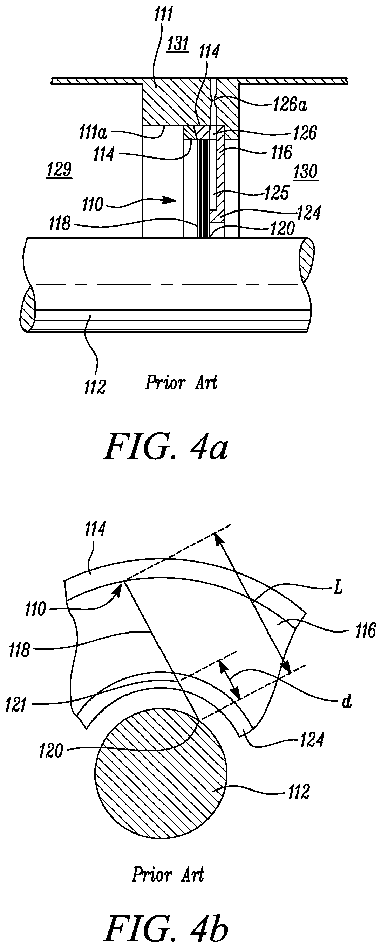

Fig.4a shows a cross-sectional view of a brush seal arrangement of the type disclosed in United States patent US 6,173,962. The arrangement includes a single brush seal element generally indicated at 110. The brush seal element 110 is positioned between relatively movable parts, including an annular static part 111 and a rotatable shaft 112. The brush seal element 110 is located within a housing recess 111 a defined by the radially inner portion of the static part 111. The brush seal element 110 comprises a mounting ring 114, an annular backing member 116 and an annular layer of tightly packed, radially inwardly directed bristles 118, which are canted in an anti-clockwise direction relative to a radial line on the radial-azimuthal contact plane.

In further arrangements, the backing member 116 of the brush seal element 110 has, for the majority of its radial depth, an axially spaced relationship with the adjacent face of the pack of bristles 118 providing a single radially extending recess or chamber to pressurise the brush seal element 110 and support the portion of the bristle layer out of contact with the backing member 116. This arrangement allows the surface of back pressure to be maximised and the force acting between the bristles 118 and the backing ring to be minimised, allowing individual bristles to move more freely relative to the backing member 116. To achieve this effect, the radially inner circumference of the backing member 116 is provided with an axially directed, upstanding annular flange 124 which engages the bristles 118 at a radially innermost location of the backing member 116. The lip of the flange 124 provides an annular contact surface with the downstream face of the bristle layer. Thus, the remainder of the backing member 116 is axially spaced from the layer of bristles 118 so that backing member 116, flange lip 124 and the bristle layer cooperate to define a single annular chamber 125. In further examples, the chamber 125 may be subdivided into part-annular segments by radial walls or partitions to form a plurality of part-annular segmented chambers, so preventing circumferential fluid flow. A source of pressurised fluid 131 is provided in communication with said chamber 125 or part-annular segmented chambers, via a communicating passage 126 formed in the static part 111, the passage 126 comprising a constriction 126a to meter the flow of fluid. In this way, the arrangement seeks to pressurise the chamber 125 to lift the bristles 118 from the upstanding annular flange 124.

Fig.4b shows a frontal view of the brush seal arrangement previously shown in Fig.4a. The bristles 118 are shown to be inclined in the circumferential direction so that their free ends 120 engage the surface of the shaft 112 lightly and at an angle to a tangent thereto. The radially inner diameter of the backing member 116 is greater than the radially outer diameter of shaft 112, the radially inner diameter of the backing member 116 comprising a clearance distance sufficient to accommodate thermal growth effects and orbital movements of the shaft 112 within design limits. The backing member 116 extends in a radially inward direction from the mounting ring 114 towards the shaft 112. The backing member 116 is positioned adjacent the downstream face of the layer of bristles 118 so as to provide axial support for the bristles 118 in the axial direction, i.e. from left to right as viewed in Fig.4a. The backing member 116 comprises a planar face at the radially inner portion of the backing member 116, which is in nominal contact with the bristle layer 118 across the entirety of its surface.

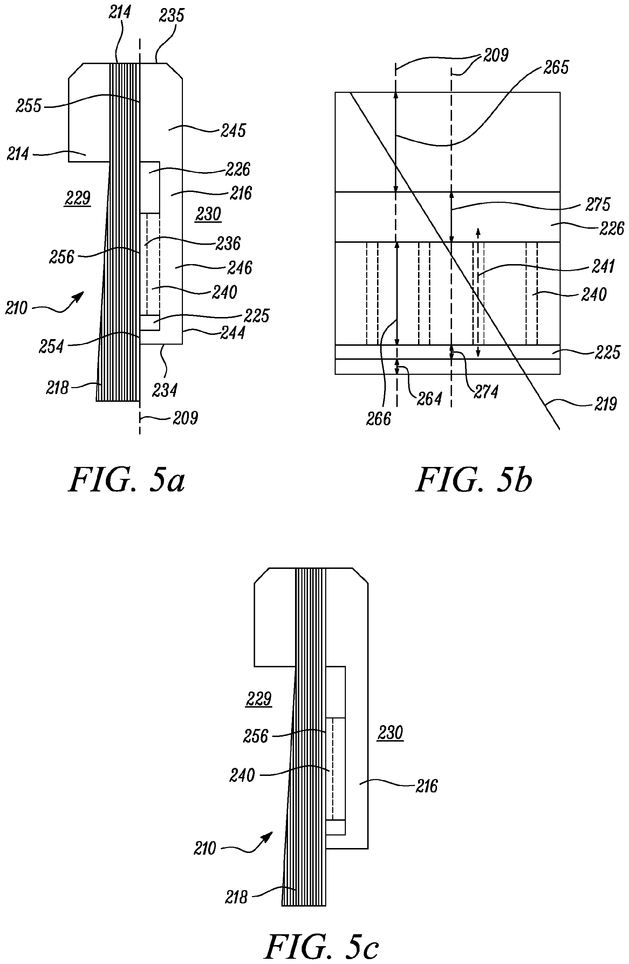

Fig.5a shows a cross-sectional view in the radial-axial plane of a brush seal arrangement according to examples of the present invention, located between a high pressure upstream region 229, and a relatively lower pressure downstream region 230. The example shown comprises a single brush seal element, generally indicated at 210, positioned between relative movable parts, comprising an annular static part and a rotatable shaft (not shown). According to examples, the brush seal element 210 is located within a housing recess defined by the radially inner portion of the static part. The brush seal element 210 comprises a mounting ring 214, a backing member 216, and a layer of tightly packed, radially inwardly directed bristles 218. In some examples, such as the example shown, the backing member 216 is an annular backing member. The bristles 218 are shown to be canted in an anti-clockwise direction relative to a radial line on the radial-azimuthal contact plane. This direction of cant is most suitable when the shaft rotates mainly in a clockwise direction. In some examples, the bristles 218 may be canted in an opposite direction for a rotatable shaft which rotates mainly in an anti-clockwise direction. It will however be appreciated that the direction of cant may vary according to requirements and is not limited to a particular configuration illustrated in the respective drawings.

The backing member 216 is positioned adjacent the downstream face of the bristle layer 218 so as to provide axial support for the bristles 218 in the axial direction, i.e. from left to right as viewed in Fig.5a. The backing member 216 of the brush seal element 210 has, for the majority of its radial depth, an axially contacting relationship with the adjacent face of the pack of bristles 218. Thus, the backing member 216 comprises a first contact member 234 located at a first contact location 244. The first contact location 244 is, according to some examples, located at the radially inner circumference of the backing member 216. The first contact member 234 may be, according to some examples, in the form of an axially directed, upstanding annular body. In the example shown, the first contact member 234 is, in the form of an axially directed, upstanding annular flange. Thus, it will be appreciated that the first contact member 234 comprises an upstream-facing, radially extending contact surface configured to contact the bristles 218 along a radially extending contact line 209. The contact surface of the first contact member 234 is termed the first contact surface 254. Thus, the surface along the contact line 209 over which the first contact surface 254 contacts the bristles 218 defines a first contact surface 264. In some examples, the first contact surface 264 may be rectangular. In further examples, the first contact surface 264 may be any one of a two-dimensional or three-dimensional spherical, ellipsoid, ovular, or geometrical cross-section, as required. In further examples, a lip of the first contact member 234 may be radiused. Such a radiused lip may aid in preventing sharp edges from rubbing against the bristle layer 218, regardless of contact angle.

The backing member 216 also comprises a second contact member 235 located at a second contact location 245. The second contact location 245 is located at a position which is radially outwardly of the first contact location 244. In some examples, such as that shown in Fig.5a, the second contact location is located at a radially outer location of the backing member 216. Thus, the second contact location 245 is spaced from the first contact location 244 along the radial contact line 209 on the radial-azimuthal plane. The second contact member 235 is, according to some examples, in the form of an axially directed, upstanding annular body. In the example shown, the second contact member 235 comprises an upstream-facing, radially extending contact surface configured to contact the bristles 218 along the radial contact line 209 on the radial-azimuthal plane. The contact surface of the second contact member is termed the second contact surface 255. Thus, the surface along the radial contact line 209 on the radial-azimuthal contact plane over which the second contact surface 255 contacts the bristles 218 defines a second contact surface 265. In some examples, the second contact surface 265 may be rectangular. In further examples, the second contact surface 265 may be any one of a two-dimensional or three-dimensional spherical, ellipsoid, ovular, or geometrical cross-section, as required. In further examples, a lip of the second contact member may be radiused.

In some examples, such as the example shown in Fig.5a, the second contact surface 265 is larger than the first contact surface 264. It will be appreciated that, in further examples, the second contact surface 265 may be substantially equivalent to the first contact surface 264. In yet further examples, the second contact surface 265 may be smaller than that of the first contact surface 264.

In some examples, as shown in Fig.5a, the backing member 216 comprises a third contact member 236 located at a third contact location 246. The third contact location is located at a position which is radially outwardly of the first location 244, and radially inwards of the second contact location 245. In some examples, such as that shown in Fig.5a, the third contact location is located at a radially mid-location of the backing member 216. Thus, the third contact location 246 is spaced from the first contact location 244 the along the radial contact line 209 on the radial-azimuthal contact plane. Furthermore, the third contact location 246 is spaced from the first contact location 244 the along the radial contact line 209 on the radial-azimuthal contact plane. The third contact member 236 may, according to some examples, be in the form of an axially directed, upstanding annular body. Thus, the third contact member 236 may comprise an upstream-facing, radially extending contact surface configured to contact the bristles 218 along the radial contact line 209 on the radial-azimuthal contact plane. The contact surface of the third contact member 236 is termed the third contact surface 256. Thus, the surface along the radial contact plane 209 over which the third contact surface 256 contacts the bristles 218 defines a third contact surface 256. In some examples, the third contact surface 256 may be rectangular. In further examples, the third contact surface 256 may be any one of a two-dimensional or three-dimensional spherical, ellipsoid, ovular, or geometrical cross-section, as required. In further examples, a lip of the third contact member 236 may be radiused.

It will be appreciated that in further examples, the backing member 216 may comprise a fourth or further contact member (not shown) located at a fourth or further contact location. In such examples, the fourth or further contact member may be broadly similar to the third contact member 236 located at a third contact location 246, mutatis mutandis.

In some examples, the third contact surface 256 may be larger than either or both of the first and second contact surfaces 264,265. In further examples, the third contact surface 256 may be substantially equivalent to either or both of the first and second contact surfaces 264,265. In yet further examples, the third contact surface 256 may be smaller than either or both of the first and second contact surfaces 264,265.

As shown in Fig.5a, the surfaces of the backing member 216 between the first contact surface 254 and the second contact surface 255 are axially spaced from the layer of bristles 218. Thus, the backing member 216, first contact member 224, second contact member 235, and the bristle layer 218 cooperate to define a first chamber 225. Thus, the first chamber 225 comprises a first chamber opening 274. The first chamber opening 274 may be resolved adjacent to the radial contact line 209 of the radial-azimuthal contact plane. In further examples, the backing member 216, first contact member 224, second contact member 235, third contact member 236, and the bristle layer 218 cooperate to define two or more chambers. In the example shown in Fig.5a, the inclusion of the third contact member 236 divides the space between the backing member 216 and the layer of bristles 218 to form a first chamber 225 and a second chamber 226. Thus, the second chamber 226 comprises a second chamber opening 275. The second chamber opening 275 may be resolved adjacent to the radial contact line 209 of the radial-azimuthal contact plane. The first chamber 225 extends between the first contact member 234 and the third contact member 236. The second chamber 225 extends between the third contact member 236 and the second contact member 235. In some examples, the first chamber 225 may be an annular first chamber 225. Additionally or alternatively, the second chamber may be an annular second chamber 226. Thus, in some examples, both the first chamber 225 and the second chamber 226 may be annular.

It will be appreciated that, resolved adjacent to the radial contact line 209 of the radial-azimuthal contact plane, a collective contact surface of the respective first and second contact surfaces 254,255 of the backing member 216 is greater than a surface area of the first chamber opening 274. Additionally or alternatively, resolved adjacent to the radial contact line 209 of the radial-azimuthal contact plane, collective contact surfaces of the respective first, second and third contact surfaces 254,255,256 of the backing member 216 is greater than collective surface area of the first and second chamber openings 274,275. Additionally or alternatively, resolved adjacent to the radial contact line 209 of the radial-azimuthal contact plane, collective contact surfaces of the respective first, second, third, or further contact surfaces of the backing member is greater than collective surface of the first, second, or further chamber openings.

Fig.5a also shows an outline of a first passageway 240 configured within the body of third contact member 236. In further examples, the third contact member 236 may comprise two or more first passageways 240. In the specific example shown, the first passageway 240 extends, in the radial direction, between the first chamber 225 and the second chamber 226. Thus, the first passageway 240 allows, in use, the flow of a fluid between the first chamber 225 and the second chamber 226, and vice-versa. In this way, a pressurised fluid is provided, in use, within both of the first chamber 225 and the second chamber 226 to at least partially react forces exerted on the bristles 218, in use, against the backing member 216. In further examples, as shown in Fig.5c, the arrangement is broadly similar to that of Fig.5a, apart from the first passageway 240 being optionally located on, or formed into, the third surface 256 rather than being configured within, and extending through, the body of third contact member 236 itself.

Referring again to Fig.5a, the first chamber 225 and the second chamber 226 extend continuously around the full circumference of the backing member 216 to form a respective first annular chamber 225 and a respective second annular chamber 226, the features of which may be applied to any of the examples shown in Figs.5a to 10b. In further examples, the first chamber 225 and the second chamber 226 may be subdivided into part-annular segments by radial walls (not shown), for example, in effect forming a plurality of radially segmented chambers. Subdividing the respective chambers 225,226 in this way may advantageously restrict circumferential fluid flow within the chamber.

Referring now to Fig.5b, there is shown a frontal view of the arrangement described in Fig.5a, which additionally shows a general orientation of the bristles 219 in which the bristle layer 218 is orientated relative to the backing member 216 and the radial contact line 209. A first passageway axis 241, being an axis of at least a portion of the first passageway 240, is shown to extend in a radial direction which is at least substantially parallel to the radial contact line 209

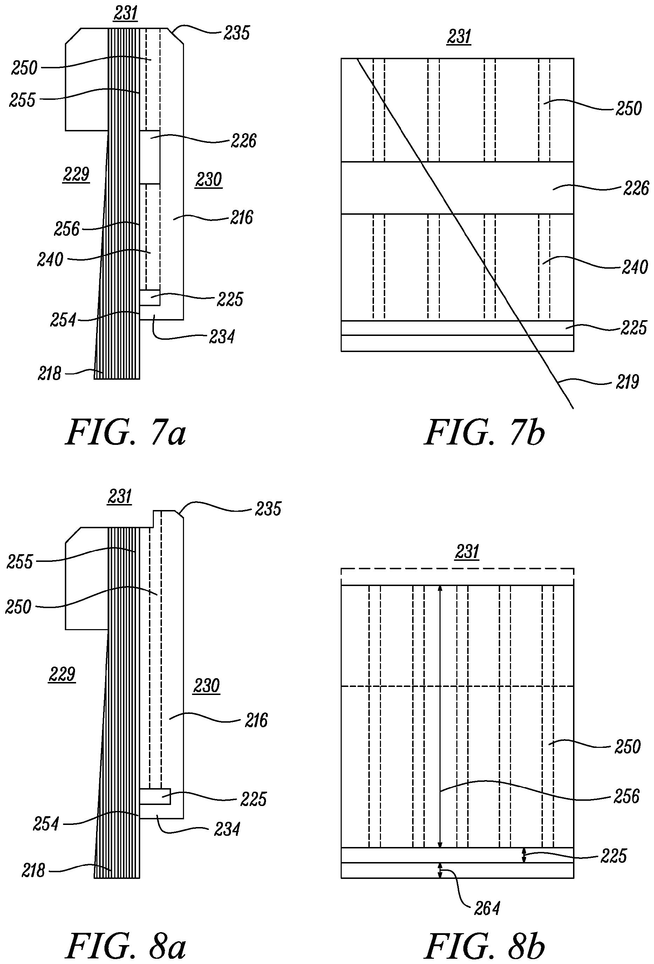

In the examples shown in Figs.5a to 6c and Fig.9a to 10b, there is no dedicated pressure supply shown for supplying the brush seal arrangement with a pressurised fluid, other than the flow of pressurised fluid through the bristle layer 218 into the first chamber 225 and the second chamber 226. Thus, there is no separate source of pressurised fluid 231 or second passageway 250, of the type shown in Figs.7a to 8b, for supplying either or both of the first chamber 225 and the second chamber 226 with a pressurised fluid. In some examples, it will be appreciated the dedicated pressure supply for supplying the brush seal arrangement with a pressurised fluid, as shown in Figs.7a to 8b may be applied to the arrangements shown and described in Figs.5a to 6c and Fig.9a to 10b. Thus, the arrangements shown in Figs.5a to 6c and Fig.9a to 10b may comprise a second passageway extending, in the radial direction, between a source of a pressurised fluid, and either or both of the first and second chambers 225,226.

In the examples shown in Figs.5a to 6c and Fig.9a to 10b, despite the lack of a dedicated pressure supply for supplying the brush seal arrangement with the pressurised fluid, the or each first passageway 240 allows the flow of pressurised fluid, between the first chamber 225 and the second chamber 226, and vice-versa. It will be appreciated that the pressurised fluid within a respective chamber 225,226 will flow between the chamber 225,226 of relatively higher pressure towards the chamber 225,226 of relatively lower pressure. Thus, in some examples, the first passageway 240 may allow the flow of a pressurised fluid between the first chamber 225 and the second chamber 226, and vice-versa. In the examples shown in Figs.5a to 6c, the pressure in either or both of the first chamber 225 and the second chamber 226 is determined by the working fluid pressure and leakage flow from the upstream region 229 flowing axially downstream through the bristle layer 218, and the leakage flow out of either or both of the first chamber 225 and the second chamber 226 past the first contact member 234. In some examples, the porosity of the bristles 218 may be increased, or the density of the bristles 218 reduced, to encourage the leakage of working fluid through the bristles 218 in this region. Thus, once a steady condition is reached, an equilibrium fluid pressure is established in either or both of the first chamber 225 and second chamber 226.

The equilibrium fluid pressure provides a value of fluid pressure between that of the high upstream pressure region 229, and a relatively lower pressure downstream region 230. The equilibrium pressure in either or both of the first chamber 225 and the second chamber 226, may be above the downstream pressure in region 230. Thus, the equilibrium pressure in either or both of the first chamber 225 and the second chamber 226 being, in use, above that of the relatively lower pressure downstream region 230, at least partially balances the axially downstream directed forces on the acting on the bristles 218. In some examples, the equilibrium pressure in either or both of the first chamber 225 and the second chamber 226 is substantially closer to the fluid pressure of the relatively higher upstream pressure region 229 than the fluid pressure of the relatively lower downstream pressure region 230. In some examples, the equilibrium pressure in either or both of the first chamber 225 and the second chamber 226 is either equal to or less than the fluid pressure of the relatively higher upstream pressure region 229. In further examples, where either or both of the first chamber 225 and the second chamber 226 are fluidly connected to an external pressurised fluid source, the equilibrium pressure in either or both of the first chamber 225 and the second chamber 226 may be equal to or greater than the fluid pressure of the relatively higher upstream pressure region 229.

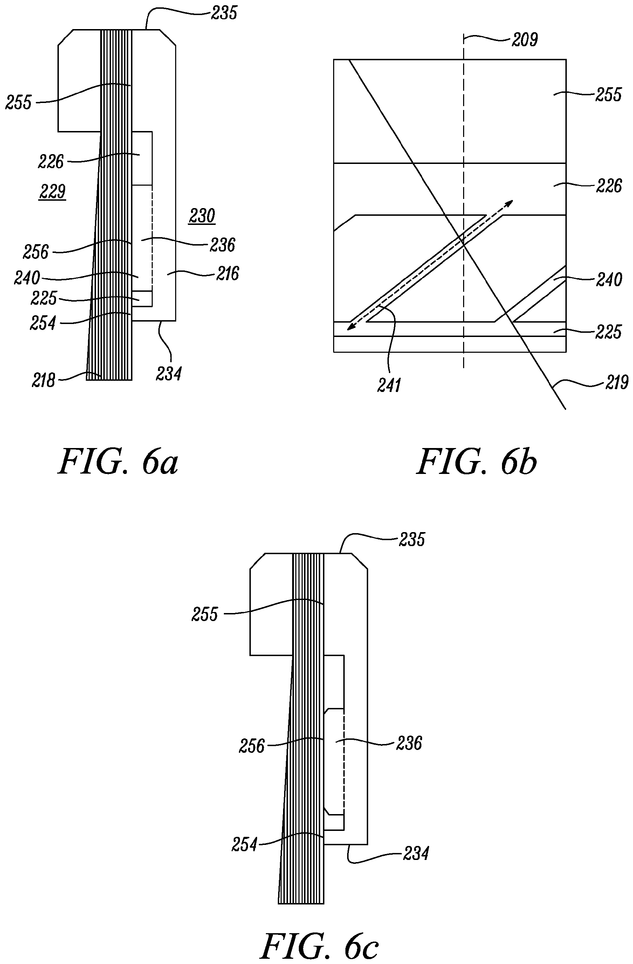

Figs.6a and 6b show modified arrangements of the example previously described in Fig.5c. In particular, the first passageway 240 is located on, or formed into, the third surface 256. Furthermore, it is shown that either or both of the first passageway 240 and the first passageway axis 241 extend in a direction which is canted away from the radial contact line 209. In this way, the first passageway axis 241 extends in a direction which is substantially normal to that of the general orientation of the bristles 219. Canting either or both of the first passageway 240 and the first passageway axis 241 in this manner reduces the possibility of the bristles 218 becoming caught within the or each first passageway 240. Furthermore, the or each first passageway 240 may react forces exerted on the bristles 218 by the fluid in a region 229 upstream of the seal, in use, against the backing member 216.

Fig.6c shows an additional configuration in addition to that of Figs.5a to 6b, which may be employed in any of the further described embodiments, wherein the third contact member 236 comprises a radiused or rounded edge of the third contact surface 256. Such a feature may result in a reduced third contact surface 256 relative to the arrangements shown and described, but may aid in preventing sharp edges from rubbing against the bristle layer 218 regardless of contact angle.

Referring now to Fig.7a and 7b, the arrangement shown is broadly similar to that of Fig.5a and 5b, apart from features which shall now be described. Where appropriate, like features have been given corresponding reference numerals to those of Figs.5a to 6c. It will be appreciated that features described in relation to Figs.5a to 6c may be applied to the arrangement of Figs.7a and 7b, mutatis mutandis. Referring to the arrangement of Fig.7a, Fig.7a comprises a second passageway 250 configured within, and extending through, the second contact member 235. In further examples, the second contact member 235 may comprise two or more second passageways 250. Thus, the or each second passageway 250 is configured radially outwardly of the or each first passageway 240. In further examples, the arrangement shown in Fig.5c may apply in conjunction with the arrangement of Figs.7a or 7b, wherein the or each first passageway 240 may be optionally located on, or formed into, the third surface 256 rather than being configured within, and extending through, the body of third contact member 236 itself. Additionally or alternatively, the or each second passageway 250 may be optionally located on, or formed into, the second surface 255 rather than being configured within, and extending through, the body of second contact member 235 itself.

In Figs.7a and 7b, the second passageway 250 extends, in the radial direction, between a source of a pressurised fluid 231, and the second chamber 226. Thus, in some examples, the second passageway 250 allows the flow of fluid between the source of pressurised fluid 231, and both the first chamber 225 and the second chamber 226. In this way, through fluid communication between the first chamber 225 and the second chamber 226, both the first chamber 225 and the second chamber 226 are at least partially pressurised by the pressurised fluid. Thus, the pressurised fluid at least partially reacts forces exerted on the bristles 218, in use, against the backing member 216. In Figs.7a and 7b, the second passageway 250 terminates at a radially outer face of the second contact member 235. Thus, the source of pressurised fluid 231 may be immediately adjacent the radially outer face of the second contact member 235. In further examples, the second passageway 250 may extend any one or more of radially outwardly of, axially upstream of, or axially downstream of the radially outer face of the second contact member 235.

Figs.8a and 8b provide a further example, showing a modified arrangement of the example previously described in Figs.7a and 7b. Where appropriate, like features have been given corresponding reference numerals to those of Figs.5a to 7b. In the arrangement shown, the backing member 216 comprises a first contact member 234 and a second contact member 235 only. Thus, there is provided a first chamber 225 at a radially inner location of the backing member 216, the second passageway 250 extending over a large portion of the radial length of the second contact member 235. In some examples, the second passageway 250 extends between about 50% to about 99% of the radial length of the second contact member 235. In further examples, the second passageway 250 extends between about 70% to about 99% of the radial length of the second contact member 235. In some examples, the second passageway 250 extends between about 80% to about 99% of the radial length of the second contact member 235. Thus, the second passageway 250 extends between the source of pressurised fluid 231, and the first chamber 225 to supply the first chamber 225 with the pressurised fluid. Furthermore, resolved adjacent to the radial contact line 209, a collective contact surface of the first contact surface 254 and the second contact surface 265 is greater than a collective surface of the first chamber 225. By maximising the size of either or both of the second contact surface 255 and the first contact surface 254, fretting wear between the bristles 218 and the backing member 216 is reduced.

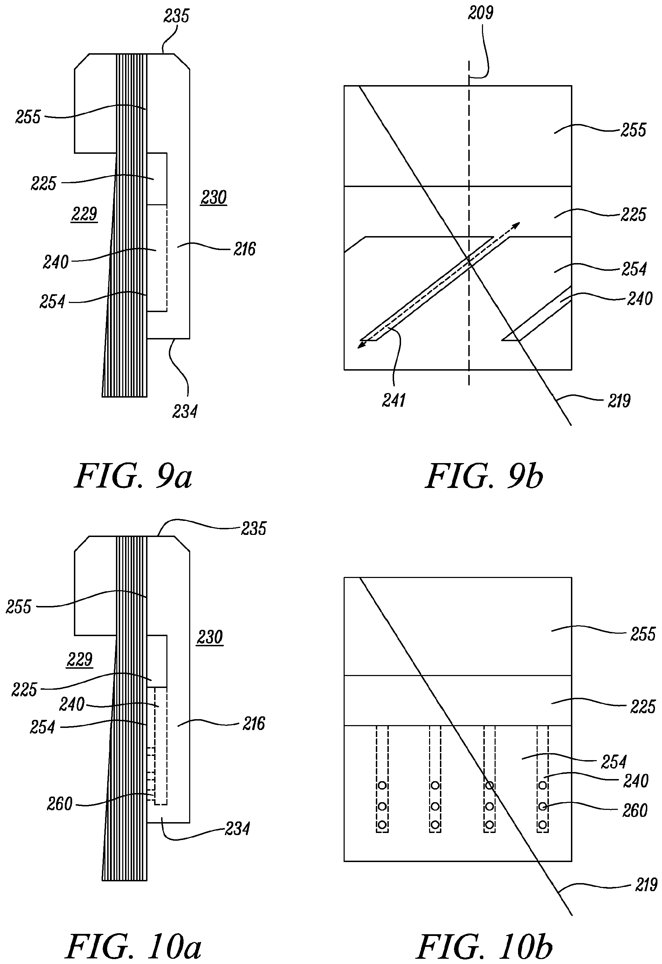

Figs.9a and 9b provide a further example, showing a modified arrangement of the example previously described in Figs.6a and 6b. Where appropriate, like features have been given corresponding reference numerals to those of previously described figure 5a to 7b. In the arrangement shown, the backing member 216 comprises a first contact member 234 and a second contact member 235. Thus, there is provided a first chamber 225. According to the examples shown, one or more first passageways 240 are located on, or formed into, the first contact surface 254, the or each of the first passageway 240 extending radially inwardly from the first chamber 225. According to examples, either or both of the first passageway 240 and the first passageway axis 241 extend in a direction which is canted away from the radial contact plane 209. In this way, the first passageway axis 241 extends in a direction which is substantially normal to that of the bristles 218. Canting either or both of the first passageway 240 and the first passageway axis 241 in this manner reduces the possibility of the bristles 218 becoming caught within the or each first passageway 240. Thus, the or each first passageway 240 may provide a similar effect to the first chamber 225 in Figs.6a and 6b, in that fluid pressure in the or each first passageway 240 may react forces exerted on the bristles 218 by the fluid in a region 229 upstream of the seal, in use, against the backing member 216, without the requirement for two or more annular fluid chambers.

Figs.10a and 10b show a modified arrangement of the example previously described in Figs.9a and 9b. Where appropriate, like features have been given corresponding reference numerals to those of Figs.5a to 7b. In the arrangement shown, the backing member 216 comprises a first contact member 234 and a second contact member 235. Thus, there is provided a first chamber 225. According to the examples shown in Figs.10a and 10b, one or more first passageways 240 comprising a defined diameter are located within the first contact member 234, the or each of the first passageways 240 extending radially inwardly from the first chamber 225. In the example shown, each of the first passageways 240 also provided with one or more axially extending orifices 260 which allow the pressurised fluid to exit from the or each first passageway 240 through the one or more axially extending orifices 260. Thus, first contact surface 254 is provided with one or more axially extending orifices 260 exiting the first contact member 234 within the first contact surface 264. Accordingly, the or each axially extending orifice 60 provides a similar effect to that of the first chamber 225 in Figs.6a and 6b, in that fluid pressure in the or each axially extending orifice, and in the vicinity of the or each axially extending orifice, may react forces exerted on the bristles 218 by the fluid in a region 229 upstream of the seal, in use, against the backing member 216, without the requirement for multiple annular chambers. In some examples, the diameter of one or more of the first passageways 240 may be between about 20% to about 80% of the axial thickness of the backing member 216. In further examples, the diameter of one or more of the first passageways 240 may be between about 40% to about 80% of the axial thickness of the backing member 216. In yet further examples, the diameter of one or more of the first passageways 240 may be between about 50% to about 75% of the axial thickness of the backing member 216. In some examples, the first passageways 240 may be provided between pillars, using a deposition or layered construction method. In yet further examples, the axis of the first passageway may extend in a direction which is canted away from the radial contact line 209. In further examples, the arrangement may be provided without a first chamber 225 of the type shown in Figs.5a to 10b and may be instead provided with a series of axially extending orifices 260 as shown in Fig.10a and 10b. Thus, the first, second or further chambers may instead be defined by one or more randomly positioned axially extending orifices 260, one or more rows comprising two or more axially extending orifices 260, one or more columns comprising two or more axially extending orifices 260, or one or more clusters comprising two or more axially extending orifices 260.

In the examples shown and described in Figs.5a to 10b, the source of pressurised fluid 231 may be provided to either or both of the first chamber 225 and the second chamber 226 from a location axially upstream of one or more of the or each second passageway 250, backing member 216 and the bristle layer 218. In further examples, the source of pressurised fluid 231 is provided to either or both of the first chamber 225 and the second chamber 226 from an axial location approximately equivalent to, but radially outwards of, one or more of the or each second passageway 250, backing member 216 and the bristle layer 218.

In further examples, the fluid pressure in either or both of the first chamber 225 and the second chamber 226 may be the same as, or substantially equivalent to, that of the source of the pressurised fluid 231. Furthermore, the fluid pressure in either or both of the first chamber 225 and the second chamber 226 may be reduced or modified by providing a constant or variable constriction, or valve, in either or both of the first passageway 240 and the second passageway 250. Such an arrangement may comprise one or more pressure sensors and controllers configured to measure, monitor and control the fluid pressure in either or both of the first chamber 225 and the second chamber 226. In this way, the fluid pressure in either or both of the first chamber 225 and the second chamber 226 may be tailored or controlled to enable a balancing of the forces on the bristle pack. Particular passageway configurations for transferring pressurised fluid to either or both of the first chamber 225 and the second chamber 226 from the source of pressurised fluid may, in some examples, be equivalent to those described in United States patent US 6,173,962, which is hereby incorporated by reference.

In some examples, the source 231 of pressurised fluid is chosen such that the pressure of the fluid supplied to either or both of the first chamber 225 and the second chamber 226 comprises a static pressure which is relatively greater than that of both the upstream region 229 and the downstream region 230. In preferred examples, however, the fluid supplied comprises a static pressure which is relatively equal to or less than the upstream region 229 and relatively greater than that of the downstream region 230. In some examples, the pressurised fluid may refer to a fluid pressurised to a static fluid pressure which is greater than 1atm. In further examples, the pressurised fluid may refer to a fluid pressurised to a static fluid pressure which is greater than the static fluid pressure of the downstream region. The quotient of the static pressure above downstream and the differential pressure (upstream above downstream) can be called the pressure balancing ratio. In some examples, the fluid may be pressurised to a pressure balancing ratio between about 0.8 to about 1.1. In further examples, the fluid may be pressurised to a pressure balancing ratio between about 0.9 to about 1.05. In yet further examples, the fluid may be pressurised to a pressure balancing ratio between about 0.95 to about 1.0. In preferred examples, it will be appreciated that the fluid is a gas. The fluid may be a working gas. In most preferred examples, the working gas is air.

Thus, the pressurised fluid within the first chamber 225 may at least partially react forces exerted on the bristle layer 218 by the fluid in the upstream region 229, in use, against the backing member 216. In this way, the force exerted on the bristle layer 218 by the pressurised fluid in either or both of the first chamber 225 and the second chamber 226 at least partially reacts forces exerted on the bristle layer 218 by the fluid in the upstream region 229. Thus, it will be appreciated that the net axial force between the bristle layer 218, the first contact surface 254 and either or both of the second contact surface 255 and third 256 or further contact surfaces is at least partially reduced. In some examples, the force exerted on the bristle layer 218 by the pressurised fluid in either or both of the first chamber 225 and the second chamber 226 reacts the forces exerted on the bristle layer 218 by the fluid in the upstream region 229, so that there are substantially no net axial forces between the bristle layer 218, the first contact surface 254 and either or both of the second contact surface 255 and third 256 or further contact surfaces. This at least partially reduces, or substantially eliminates the axially directed and radially constraining frictional force on the bristle layer 218, mutatis mutandis. If the pressure at the source of pressurised fluid 231 is too high, the axially directed and radially constraining frictional force acting on the pack of bristle layer 218 will cease to be balanced. Thus, if the pressure differential across the bristle layer 218 is too high, fluid flow through the pack may increase to a level at which the bristle layer 218 is disturbed and leakage past the first contact member 234 will increase. As previously described, the fluid pressure in either or both of the first chamber 225 and the second chamber 226 may be reduced or modified by providing a constant or variable constriction, or valve, in either or both of the first passageway 240 and the second passageway 250. In preferred examples, the force exerted on the bristle layer 218 by pressurised fluid in either or both of the first chamber 225 and the second chamber 226 only partially balances the opposing forces exerted on the bristle layer 218 by the fluid in the upstream region 229, so that there is generally a net axial force between the bristle layer 218, the first contact surface 254 and either or both of the second contact surface 255 and third 256 or further contact surfaces. This gives rise to the radially constraining frictional force on the bristle layer 218.

Those skilled in the art will be aware that brush seals are inherently leaky and are designed for a lower, but finite, leakage flow rate through the bristle layer. In a seal according to the invention, leakage flow occurs through the bristles in the normal flow path direction. Thus, the total mass flow rate required to pressurise either or both of the first chamber 225 and the second chamber 226 to a pressure which at least partially reacts the forces exerted on the bristles 218, is equal to the sum of the flow rate required to pressurise the respective chambers 225,226, plus the leakage flow rate. Means for calculating such flow rates, along with necessary flow rates to achieve a given pressure within a chamber, given a bristle leakage, are described in United States patent US 6,173,962, which is hereby incorporated by reference.

To further reduce leakage flow rates, and hence reduce leakage flow through the bristles, the examples described may be modified by overlying an additional porous layer over, or axially upstream of the bristle layer 218, or either or both of the first chamber 225 and the second chamber 226. In some examples, the additional porous layer (not shown) may be located immediately upstream of the bristle layer 218. In further examples, the additional porous layer (not shown) may be located immediately upstream of only a portion of the bristle layer 218. Where applicable, such an additional layer should not significantly damp the bristles to inhibit their ability to accommodate shaft movement etc. In this way, the additional layer of bristles may be provided adjacent the upstream face of the pack of bristle layer 218 extending inwardly from the radially outer circumference of the backing member 216 to overlap either or both of the first contact member 234 and the second contact member 235. Thus, the previously described brush seal arrangements may be located in series relationship with an additional sealing element, so that a further chamber is defined between the respective brush seal arrangement and the fluid in the upstream region 229. Thus, fluid in the further chamber may be maintained or controlled, in use, at a pressure between that of the fluid in the upstream region 229 and the relatively lower pressure downstream region 230. In this way, the fluid pressure supplied to either or both of the first chamber 225 and the second chamber 226 may be reduced to achieve the described pressure balancing effect. Applicable arrangements and configurations of the additional porous layer are described and shown in United States patent US 6,173,962, which are hereby incorporated by reference.

It will be appreciated that the bristle layer 218 may be formed from a number of various materials exhibiting suitable stiffness, temperature resistance, creep resistance, erosion resistance and corrosion resistance characteristics. In some examples, the bristle layer 218 may be formed from a multiplicity of tufts of lengths of resilient wire secured to the backing member 216, or between the second contact member 235 and the backing member 216, by any suitable joining technique, such as welding or brazing or crimping. The particular technique employed will, of course, be dictated by the particular choice of materials employed and the temperatures at which they will be expected to operate. In the examples shown, the bristles comprised within the bristle layer 218 are cobalt alloy wire. In further examples, the bristles comprised within the bristle layer 218 may be comprised of a nickel-based alloy. Furthermore, in the examples shown, the backing member 216 and respective contact members are nickel based, or a compatible alloy, and are welded together to provide an integral unit. In further examples, it will be appreciated that further materials may be employed, separately or in combination with those disclosed, in order to achieve or provide similar or substantially similar performance, characteristics or material behaviours. Thus, it will be appreciated that one or more of the bristle layer 218, the backing member 216, or the respective contact members, may comprise a number of further alloy-constituents commonly used in gas turbine engine, or high-temperature applications.

It will be appreciated that in all of the above-disclosed exemplary embodiments, the majority (e.g., at least 50% of the length) of the bristle layer 218 along the radial contact line 209 is, in use, maintained in contact with and supported by two or more contact surfaces 254,255,256 of the backing member 216. In further examples, between 50% and 99% of the total length of the bristle layer 218 along the radial contact line 209 is, in use, maintained in contact with and supported by two or more contact surfaces 254,255,256 of the backing member 216. In yet further examples, between 60% and 99% of the total length of the bristle layer 218 along the radial contact line 209 is, in use, maintained in contact with and supported by two or more contact surfaces 254,255,256 of the backing member 216. In yet further examples, between 70% and 99% of the total length of the bristle layer 218 along the radial contact line 209 is, in use, maintained in contact with and supported by two or more contact surfaces 254,255,256 of the backing member 216. It will be appreciated that the expressed percentages of the total length of the bristle layer 218 along the radial contact line 209 maintained in contact with and supported by two or more contact surfaces 254,255,256 are expressed exclusively of recessed features, such as passageways 240 and orifices 260, set into in the two or more contact surfaces 254,255,256, as shown in Figs.6a-6c, and 9a-10b. The additional contact surface between the two or more contact surfaces 254,255,256 and the bristle layer 218 supports the individual bristles from moving axially and provides more support over the length of the bristles, alleviating some of the problems associated with previously known seal arrangements.

In further examples, it will be understood that the invention is not limited to an annular brush seal with a backing member in a radial-azimuthal plane. Thus, it may equally apply to a brush seal in alternative orientations such as that with a backing member cylinder in an axial-azimuthal cylindrical surface. It may also apply to a segmented brush construction with the backing member in any of a radial-azimuthal plane, axial-azimuthal cylindrical surface or radial-axial plane.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A brush seal for sealing, in use, a leakage gap between relatively movable parts in an axial flow path between a high fluid pressure region (229) and a relatively lower fluid pressure region (230), the brush seal comprising:
a backing member (216) comprising a first contact member (234) and a second contact member (235), the first contact member comprising a first contact surface (254), and the second contact member comprising a second contact surface (255), wherein the second contact surface is radially displaced from the first contact surface along a radial contact line (209) to define a first chamber opening (274) therebetween; and,
a first bristle layer (218) in physical communication with both the first contact surface and the second contact surface along the radial contact line, wherein the first bristle layer is configured between the high pressure region and the backing member;
wherein along the radial contact line, a collective contact surface of the backing member between the first bristle layer and the respective contact surfaces is greater than a surface area of the first chamber opening.

2. The brush seal as claimed in claim 1, wherein the backing member comprises a third or further contact member (236) including a third or further contact surface, wherein the third or further contact surface (256) is radially displaced from the first contact surface and the second contact surface along the radial contact line to define the first chamber opening and a second or further chamber opening (275).

3. The brush seal as claimed in claim 1 or claim 2, wherein the backing member comprises a first chamber (225) which extends axially into the backing member from the first chamber opening.

4. The brush seal as claimed in claim 2 or claim 3, wherein the backing member comprises either or both of a second and further chamber (226) which extends axially into the backing member from the second or further chamber opening.

5. The brush seal as claimed in claim 3 or claim 4, wherein the third contact member comprises a first passageway (240) extending between the first chamber and the second chamber.

6. The brush seal as claimed in any one of claims 3 to 5, wherein the second contact member comprises a second passageway (250) extending between a source of pressurised fluid (231) and either or both of the first chamber and the second chamber.

7. The brush seal as claimed in Claim 6, wherein the pressurised fluid pressurises the or each respective chamber, in use, to a pressure higher than that of the pressure of the low fluid pressure region.

8. The brush seal as claimed in claim 6 or claim 7, wherein the pressurised fluid pressurises the or each respective chamber, in use, to a pressure substantially equal to or less than that of the pressure of the high fluid pressure region.

9. The brush seal as claimed in claim 6 or claim 7, wherein the pressurised fluid pressurises the or each respective chamber, in use, to a pressure substantially equal to or greater than that of the pressure of the high fluid pressure region.

10. The brush seal as claimed in any one of claims 7 to 9, wherein the pressurised fluid, in use, at least partially reacts axially applied forces on the first bristle layer against the backing member.

11. The brush seal as claimed in any one of claims 5 to 10, wherein the first passageway is formed within a portion of the backing member.

12. The brush seal as claimed in any one of claims 5 to 10, wherein the first passageway is formed upon a portion of the backing member.

13. The brush seal as claimed in any preceding claim, wherein the or each of the first chamber and second chamber are annular, the or each chamber defining a circumferential region.

14. A gas turbine engine (10) comprising a brush seal as claimed in any preceding claim.

15. A method for sealing a leakage gap between relatively movable parts in an axial flow path between a high fluid pressure region (229) and a relatively lower fluid pressure region (230), the method comprising the steps of:
configuring a first bristle layer (218) between the high and low fluid pressure regions;
configuring a backing member (216) of the type claimed in any one of claims 1 to 22 in physical communication with and between the first bristle layer and the low fluid pressure region; and,
supplying the or each chamber with a pressurised fluid to at least partially react a portion of the first bristle layer against the backing member.
